# EUROPEAN PATENT APPLICATION

(11) **EP 2 878 366 A1**
(43) Date of publication of application: **03.06.2015**
(21) Application number: 14159085.1
(22) Date of filing: 12.03.2014
(51) Int. Cl.: B01J 20/22, B01J 20/28, B01J 20/30, B01J 20/02, B01D 53/02

(54) **Mesoporous metal-organic frameworks with dominating interparticular porosity, methods for preparation thereof and uses**

(30) Priority: 29.11.2013 CN 201310629804
(71) Applicant: Beijing Star New Material Co., Ltd., Beijing (CN)
(72) Inventor: Tian, Yunqi, Dalian Liaoning (CN); Chen, Yan, Dalian Liaoning (CN); Liu, Xun, Dalian Liaoning (CN)
(74) Representative: Sun, Yiming

(57) **Abstract**

The present invention is related to a series of hierachical porous materials based on nano-scale MOFs (NMOFs) and the preparation methods thereof, namely IPD-mesoMOF-1∼9 based on NMOFs of MIL-100 (Al, Fe, Cr, Sc and In), MIL-53 (Al), HKUST-1, DUT-5, DUT-4, MIL-101 (Cr), MIL-101 NDC(Cr), MIL-101BPDC(Cr) and MIL-110, respectively, forming the permanent interparticle porosities by means of close (or relatively close) packing. The invention further relates to methods for the preparation of these materials and their use in gas adsorption, purification of gasoline and diesel as well as support for biological macromolecules

## Description

### Technical Field

The present invention is related to a series of hierachical porous materials based on nano-scale MOFs (NMOFs) and the preparation methods thereof, namely IPD-mesoMOF-1 ∼9 based on NMOFs of MIL-1 00 (Al, Fe, Cr, Sc and In), MIL-53 (Al), HKUST-1, DUT-5, DUT-4, MIL-101 (Cr), MIL-1 01 NDC (Cr), MIL-101BPDC (Cr) and MIL-110, respectively, forming the permanent interparticle porosities by means of close (or relatively close) packing; and the preparation methods thereof.

### Background of the invention

Metal-Organic Frameworks (MOFs) are newly burgeoning porous materials assembled from organic linkers and metal ion or cluster nodes and have been developed for more than 20 years. They are potentially applied for gas-storage (such as H₂, CO₂ and CH₄), molecule separation, catalysis and drug delivery. However, most of MOF-types are still microporous, which pore aperture limits their application involving large inorganic, organic and biological molecules. Although in recent years, surfactant-templating method has led to several hierarchical porous MOFs (the pore aperture up to 20 nm, but the pore volume no more than 0.1 cm³/g), this method is obviously not so effective as it has been utilized extensively in the synthesis of mesoporous silica or metal oxides (the pore aperture varied from 2 to 50 nanometers). So as to the hierarchical porous MOF including micro-, meso- and macropores, there has been yet not any reported.

### Summary of the invention

The present invention is related to a series of hierarchical porous IPD-mesoMOFs based on various MOF-types, which comprise
micro (less than 2 nm) and mesopores (2-50 nm) or comprise not only the micro-and meso-pores, but also macropores (larger than 50 nm) and the preparation methods thereof. The IPD-mesoMOF series are generated from close or relatively close packing NMOFs of the robust well-known MOF-types, which show not only high thermal stability, but also the facile synthesis methods with good reproducibility, more suitable for industrial production.

The present invention provides aforementioned the IPD-mesoMOF series and the preparation methods that overcome the challenges for fragile and interpenetrating MOFs arose from slender rigid organic ligands and undeveloped method of surfactant templating. It is considered that the permanent interparticle porosity could be created with any MOF-type so as it was prepared as NMOF particles. On the supposition that the NMOF particles were small enough, they could aggregate into robust monoliths through the coordination bonds formed between the free metal-sites and the organic link-residues on the surfaces and borders of the each other touched NMOF particles, sustaining a permanent interparticle porosity. Thereby, our strategy can avoid the problems of high cost for the synthesis of special slender ligands, the poor thermal stability and interpenetration of the MOF structures brought by increasing MOF aperture through increasing length of the ligands and especially, the difficulties arose from surfactant templating mesoporous MOFs (ST-mesoMOFs) as follows: 1) Unlike the amorphous pore-wall nature of inorganic mesoporous materials, the mesopore walls of some ST-mesoMOFs are based on the micron- or nano-sized MOF single crystals, while the mesopores are the imprints remained from the surfactant micelles which are mixed into the MOF single crystals. However, any crystalline substance has a natural instinct to expel the non-building blocks outside its crystal body that is why those ST-mesoMOFs exhibit only a low mesopore volume (less than 0.1 cm³/g). 2) For some of the ST-mesoMOFs which pore walls consist of NMOF particles, the template of the surfactant micelles must be big enough to match with the size of NMOF particles. Otherwise, the surfactant shall not serve as the template, but a filling-stuff, with which the micropores (together with interparticle pores) were filled and hard to be cleaned up afterward; 3) More important is that many of MOF-types have to be prepared hydrothermally (or solvothermally) at a temperature over 100 °C. Under such a synthesis condition, it is not feasible for most surfactants to form the supramolecular micelles that is why only a limited number of ST-mesoMOFs have been reported so far and they were mostly based on the MOF-type of HKUST-1, which could be synthesized at a temperature below 100 °C.

The present invention concerned hierarchical porous IPD-mesoMOF-1, -2, -3,-4, -5, -6, -7, -8 and -9 are based on the well-known MOF-types of MIL-100(Al, Fe, Cr, Sc), MIL-53(Al), HKUST-1, DUT-5, DUT-4, MIL-101(Cr), MIL-101NDC(Cr), MIL-101BPDC(Cr) and MIL-110, respectively. They all have robust micro-MOF architectures, therefore, demonstrate excellent thermal stability; By successfully nanolizing the aforementioned MOF-types into the small NMOF particles and further controlling them in the appropriate stacking densities, the monolithic aggregates with the permanent interparticle pores varied from 2 to 50 nanometers are produced.

The present invention concerned IPD-mesoMOF-n (n = 1∼9) series based on NMOF particles are supposed to be uniform rigid spheres and they could be closely stacked with ordered octahedral interparticle holes, then, the relationship between the diameters of interparticle hole (φₕ) and spherical NMOF particles (φₛ) could be expressed as φₕ = 0.414φₛ, the interparticle porosity dominating mesoMOFs (IPD-mesoMOFs) with a pore diameter of 2 ≤ φₛ ≤ 50 nm could be prepared by controlling over the NMOF particles with a size of 5 nm ≤ φₘ ≤ 120 nm. Therefore, to prepare small enough NMOF particles (< 120 nm) and make them close packing should be the crucial criteria for generating the IPD-mesoMOF-1∼9A, as claimed in the present invention. And by mixing NaCl nanoparticles sized ranging from 50 to 500 nm as the hard template with the gel of an IPD-mesoMOF to be, then, allowing the gelatinous mixture to dry, the raw product of the IPD-mesoMOF-nB (n = 1∼9) containing micro-, meso- and macropores is formed. After washing away the template of NaCl with water, extracting by-products and starting materials with ethanol, the final purified IPD-mesoMOF-nB (n = 1∼9) is obtained as monolithic xerogels.

The present invention concerned IPD-mesoMOF-nA and -nB (n = 1∼9) are monolithic xerogels aggregating from gelatinous NMOF particles by desolvation. Their micropores are originated from the NMOFs of the related MOF-types, the mesopores are derived from the interparticle porosity of the aggregated NMOFs, and the macropores are generated from templates of NaCl nanoparticles of the size larger than 50nm or by supercritical CO₂ drying. The appearance of the IPD-mesoMOF series is transparent, semitransparent or opaque particle varied with regard to their mesopore size from small to large (i.e. the stacking density of the NMOF nanoparticles). These IPD-mesoMOFs exhibit large Brunauer-Emmett-Teller (BET) surface areas, generally high-mesopore-volume and tunable-mesopore-aperture varied in the scale of a few nanometers for an IPD-mesoMOF to more than a dozen nanometers for another IPD-mesoMOF. Furthermore, the yields of the IPD-mesoMOF series synthesized by the present method are generally high, and they are all facile for the production in industrial scale. The IPD-mesoMOF series after modulating or functionalizing can be applied for gas-adsorption and molecular separation (such as, CH₄ and CO₂ adsorption, gasoline/diesel desulfurization and purification), catalyst-supporting and molecular recognition /immobilization for bulky biological proteins and enzymes, etc.

The present invention related hierarchical porous IPD-mesoMOF-1∼9 show good thermal stability with their MOF structures unchanged after 12-hour-heating at 150°C under vacuum; they have mesopore-walls which exhibit various crystalline micro-MOF architectures with one- or three-dimensional channels and different micropore apertures;

The present invention concerned hierarchical porous IPD-mesoMOF-1∼9 are based on the NMOFs of MIL-100(Al, Fe, Cr, Sc), MIL-53(Al), HKUST-1, DUT-5, DUT-4, MIL-101(Cr), MIL-1 01 NDC(Cr), MIL-1 01 BPDC(Cr) and MIL-110, respectively; The NMOF particles must be relatively uniform and their size must be smaller than 120nm. Thus, the close or relatively close packing NMOF particles can afford the expected interparticle pores falling into the mesoscopic regime of 2∼50 nanometers; The density of the MOF-type must be small enough to make the NMOF particles with a certain size aggregate through the interparticle interaction forces, forming the permanent interparticle porosity;

The present invention concerned hierarchical porous IPD-mesoMOF-1∼9 are prepared as monolithic xerogel with micro- and mesopores, forming the A-Form of IPD-mesoMOF-1∼9 material, prepared as monolithic xerogel with micro-, meso- and macropores, forming the B-Form of IPD-mesoMOF-1∼9 material and prepared as monolithic aerogels with micro-, meso- and macropores and extra-large surface area by supercritical CO₂ drying, forming the C-Form of IPD-mesoMOF-1∼9 material.

The present invention concerned preparation methods for the hierarchical porous IPD-mesoMOF-1∼9 are demonstrated as follows:

### (1) The composition of starting materials:

### (a) For IPD-mesoMOF-1 (based on MOF of MIL-100(M), M=Fe³⁺, Al³⁺, Cr³⁺, Sc³⁺ and In³⁺)

A M³⁺ salt selected from the group consisted of nitrate (NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); benzene-1,3,5-tricarboxylic acid (BTC) as a ligand; and a solvent; the molar ratio of each component is as follows: M³⁺: benzene-1,3,5-tricarboxylic acid (BTC): solvent = 2 : 1 : 200-500;

### (b) For IPD-mesoMOF-2(based on MOF of MIL-53(Al))

An aluminum salt selected from the group consisted of nitrate (NO₃⁻), sulfate (SO₄²⁻) and perchlorate (ClO₄₋); 1,4 - p-phthalic acid (BDC) or 2 - X-substituted-1,4 - p -phthalic acid (X-BDC) (X = F, Cl, Br, I, NO₂, NH₂) as a ligand; and a solvent; the molar ratio of each component is as follows: Al³⁺: BDC (or X-BDC): solvent = 1.2: 1: 400-800;

### (c) For IPD-mesoMOF-3(based on MOF of HKUST-1)

Copper acetate (copper formate or copper propionate); benzene-1,3,5-tricarboxylic acid (BTC) as a ligand; and a solvent; the molar ratio of each component is as follows: Cu²⁺: benzene-1,3,5-tricarboxylic acid ligand (BTC): solvent = 2: 1: 200-500;

### (d) For IPD-mesoMOF-4(based on MOF of DUT-5)

An aluminum salt selected from the group consisted of nitrate (NO₃⁻), sulfate (SO₄²⁻), perchlorate (ClO₄⁻); an organic ligand selected from the group consisted of 4,4'-biphenyldicarboxylic acid(BPDC), (2-nitro-4,4'-biphenyldicarboxylic acid (NBPDC), 2-amino-4,4'- biphenyldicarboxylic acid(ABPDC), 2,2'-dinitro-4,4'-biphenyldicarboxylic acid (DNBPDC) and 2,2'-diamino-4,4'- biphenyldicarboxylic acid (DABPDC); and a solvent; the molar ratio of each component is as follows: Al³⁺: BPDC (NBPDC, ABPDC, DNBPDC or DABPDC): solvent =1.4: 1: 800-1400;

### (e) For IPD-mesoMOF-5(based on MOF of DUT-4)

An aluminum salt selected from the group consisted of nitrate (NO₃⁻), sulfate (SO₄²⁻) and perchlorate (ClO₄⁻); 2,6-naphthalenedicarboxylic acid(NDC) as an organic ligand; and a solvent; the molar ratio of each component is as follows: Al³⁺: 2,6-naphthalenedicarboxylic acid(NDC): solvent=1.4: 1: 800-1400;

### (f) For IPD-mesoMOF-6(based on MOF of MIL-101(Cr))

A trivalent Cr salt selected from the group consisted of nitrate(NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); 1,4- p-phthalic acid (BDC) or 2 - X-substituted-1,4-p-phthalic acid (X-BDC) (X = F, Cl, Br, I, NO₂, NH₂) as an organic ligand; and a solvent; the molar ratio of each component is as follows: Cr³⁺: 1,4- p-phthalic acid (BDC): solvent =1.2: 1: 800-1400;

### (g) For IPD-mesoMOF-7(based on MOF of MIL-1 01 NDC(Cr))

A trivalent Cr salt selected from the group consisted of nitrate(NO₃⁻), sulfate (SO₄²⁻), perchlorate (ClO₄⁻), hydrochloride (Cl⁻), hydrobromide (Br⁻), acetate (CH₃COO⁻) and formate(HCOO⁻); 2,6-naphthalenedicarboxylic acid(NDC) as an organic ligand; and a solvent; the molar ratio of each component is as follows: Cr³⁺: 2,6-naphthalenedicarboxylic acid(NDC): solvent=1.2: 1: 800∼1400;

### (h) For IPD-mesoMOF-8 (based on MOF having MIL-101 topological structure formed by Cr(III) and BPDC)

A trivalent Cr salt selected from the group consisted of nitrate (NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); an organic ligand selected from the group consisted of 4,4'-biphenyldicarboxylic acid (BPDC),(2-nitro-4,4'-biphenyldicarboxylic acid (NBPDC), 2-amino-4,4'- biphenyldicarboxylic acid (ABPDC), 2,2'-dinitro-4,4'-biphenyldicarboxylic acid (DNBPDC) and 2,2'-diamino-4,4'- biphenyldicarboxylic acid (DABPDC); and a solvent, the molar ratio of each component is as follows: Cr³⁺: BPDC (NBPDC, ABPDC, DNBPDC or DABPDC): solvent=1.1: 1: 1000-2000;

### (i) For IPD-mesoMOF-9 (based on MOF of MIL-110)

Aluminum nitrate (NO₃⁻), aluminum sulfate (SO₄²⁻) or aluminum perchlorate (ClO₄⁻); benzene-1,3,5-tricarboxylic acid (BTC) as a ligand; and a solvent; the molar ratio of each component is as follows: Al³⁺: benzene-1,3,5-tricarboxylic acid (BTC): solvent = 3: 1: 120-300;

### (2) Reaction solvent

The solvent is a fatty alcohol of less than 5 carbon atoms or a mixed solvent; the mixed solvent is the fatty alcohol in combination with N, N-dimethylformamide (DMF) or mixture of two or more of the fatty alcohols, the ratio of each component of the mixed solvent is adjusted if desired;

### (3) Reaction conditions:

The MOF hierarchical porous materials (except IPD-mesoMOF-3) are synthesized by solvothermal method or microwave synthesis method, the reaction temperatures are as follows:
For IPD-mesoMOF-1 (Fe, Al, Sc and In): 90-100°C, solvothermal method for 10-24 hrs, or microwave heating for 3-5min;
For IPD-mesoMOF-1(Cr): 130-160°C, solvothermal method for 4-5 hrs, or microwave heating for 2-3min;
For IPD-mesoMOF-2: 90-120°C, solvothermal method for 14-24 hrs, or microwave heating for 8-12 min;
For IPD-mesoMOF-3: room temperature 20-35°C, ultrasonic treatment for 0.5-2 hrs;
For IPD-mesoMOF-4: 110-130°C, solvothermal method for 18-28 hrs, or microwave heating for 8-12min;
For IPD-mesoMOF-5: 110-130°C, solvothermal method for 18-28 hrs, or microwave heating for 8-12min;
For IPD-mesoMOF-6: 130-160°C, solvothermal method for 3-5 hrs, or microwave heating for 3-5min;
For IPD-mesoMOF-7: 130-160°C, solvothermal method for 3-5 hrs, or microwave heating for 3-5min;
For IPD-mesoMOF-8: 130-160°C, solvothermal method for 3-5 hrs, or microwave heating for 3-5min;
For IPD-mesoMOF-9: 90-120°C, solvothermal method for 14-24 hrs, or microwave heating for 8-12min;

### (4) The regulation of stacking density of the NMOF particles:

(i) Adding tetra-alkyl ammonium halide (the alkyl is selected from methyl, ethyl, propyl, butyl; halogen ions may be Cl⁻ and Br⁻) into the reaction mixture as filling-stuff and homogenizer for creating the expanded and uniform interparticle mesopores. By changing the sort and amount of tetra-alkyl ammonium used, an IPD-mesoMOF-n with various pore sizes can be prepared. The obtained hierarchical porous material (xerogel) having micro and mesopores thereby, termed as A-Form material, is marked as IPD-mesoMOF-nA (n = 1-9); or
(ii) Mixing NaCl nanoparticles of 50 - 500 nm into the reaction mixture with a molar ratio of M : NaCl (M is MOF constituting metal ion) ranging from 1:1 to 1:10, the obtained hierarchical porous material (xerogel) having micro-, meso- and macropores thereby, termed as B-Form material, is marked as IPD-mesoMOF-nB(n = 1-9);
(iii) Supercritical CO₂ drying the sol/gel for the IPD-mesoMOF-nA to be, the obtained hierarchical porous material (aerogel) having micro-, meso- and macropores thereby, termed as C-Form material, is marked as IPD-mesoMOF-nC (n = 1-9)

### (5) Post-treatment of porous materials

The reaction mixture is cooled to room temperature upon completion of the reaction. The resulting sol (or gel) is processed to monolithic xerogel by:
1) filtration/centrifugation and then allow the filtrate/precipitate to dry out, or
2) directly evaporating the solvent in air,

The obtained xerogel was extracted with Soxhlet for more than 6 hrs in anhydrous alcohol or methanol, and then desolvated under vacuum, affording A-Form of the MOF-based hierarchical porous material. For delivering B-Form material, the same procedure is conducted except that the obtained xerogel is washed with de-ionized water before the Soxhlet extraction.

The present invention provides a method for regulating the size of mesopores in materials during the preparation of the MOF-based hierarchical porous material, namely IPD-mesoMOF-nA, comprising adding tetra-alkyl ammonium halide into the reaction mixture, wherein the alkyl is selected from methyl, ethyl, propyl, butyl; And the halogen ions may be Cl⁻ or Br⁻, which is removed afterward by ethanol or methanol Soxhlet extraction.

The present invention provides a method for regulating the size of mesopores in materials during the preparation of the MOF-type hierarchical porous material, namely IPD-mesoMOF-nA, wherein the mixed solvent of fatty alcohols of less than 5 carbon atoms is used.

The present invention provides preparation method for MOF-type hierarchical porous material, namely IPD-mesoMOF-nB, comprising adding NaCl nanoparticles into the reaction mass of the IPD-mesoMOF-nA Form material, wherein the size of NaCl nanoparticles is 50- 500 nm, the molar ratio of metal constituting MOF and NaCl nanoparticles ranges from 1:1 to 1:10. The NaCl template is removed afterward by water-washing.

The present invention provides application for the MOF-based hierarchical porous material, namely IPD-mesoMOF-n, in gas adsorption and storage, purification and desulfurization of gasoline and diesel, catalyst supporting and biological macromolecule immobilizing.

In a preferred embodiment, the gases are H₂, CH₄ or CO₂, and the impurities in gasoline and diesel are sulfur-containing heterocyclic aromatic (including other aromatic hydrocarbon or heterocyclic aromatic hydrocarbon), the catalysts are organic/inorganic compounds/metal or clusters and the biological macromolecules are natural proteins (including biological enzymes) and nucleic acid molecules (including virus).

The present invention provides MOF-based hierarchical porous material and its preparation method, and the advantages are as follows:
1) IPD-mesoMOF-n(n = **1-9**) according to the present invention is based on MOF-types having robust architectures and good thermal stability and can be made into small enough nanoparticles which can be aggregated into IPD-mesoMOF monolithic xerogel. Thus, it is possible for us to choose suitable IPD-mesoMOF-n (n = 1-9) with the modulated mesoporosity to meet the requirements for the certain applications.
2) All of IPD-mesoMOF-n (n = **1-9)** materials according to the present invention have tunable mesopores with large specific surface area and the pore apertures can be obtained ranging from 2 to 50 nm. And based on a same MOF-type, the tunable pore aperture of IPD-mesoMOF-n (n = **1-9)** can be varied in the scale from several nanometers for one to a dozen of nanometers for another; and they exhibit generally larger pore volume, the highest up to ca. 3 cm³/g.
3) IPD-mesoMOF-n (n = **1-9)** of the present invention is based on MOF-type which has good thermal stability, and the formation of MOF-based hierarchical porous materials-n (n = **1-9)** of the present invention does not have impact on the original thermal stability of MOF.
4) The preparation method for the IPD-mesoMOF-n (n = **1-9)** of the present invention is simple, and the reproducibility of the material is good, suitable for large-scale production.

### Brief description of the drawings

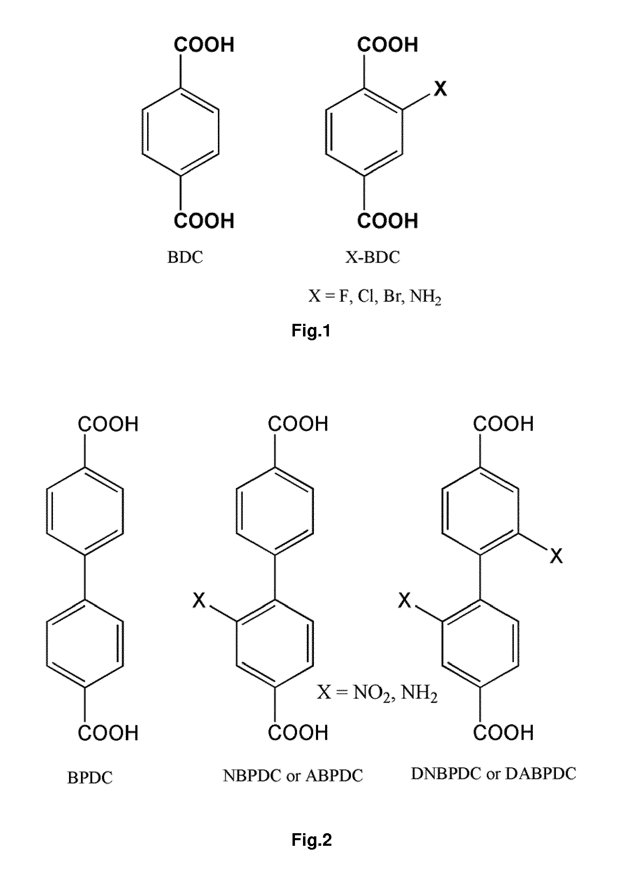

Fig. 1 The structural formula of 1,4-p-phthalic acid (BDC) or 2-X-substituted-1,4-p -phthalic acid (X-BDC) (X = F, Cl, Br, I, NO₂, NH₂);
Fig 2 The structural formula of 4-4'-biphenyldicarboxylic acid (BPDC), (2-nitro-4,4'-biphenyldicarboxylic acid(NBPDC), 2-amino-4,4'- biphenyldicarboxylic acid(ABPDC), 2,2'-dinitro-4,4'- biphenyldicarboxylic acid (DNBPDC)) or 2,2'-diamino-4,4'- biphenyldicarboxylic acid (DABPDC));
Fig. 3 X-ray powder pattern of IPD-mesoMOF-1A(Al)
Fig. 4 Scanning electron microscopy (SEM) image of IPD-mesoMOF-1A(Al);
Fig. 5 Nitrogen adsorption isotherms and pore size distribution of IPD-mesoMOF-1A(Al);
Fig. 6 X-ray powder pattern of IPD-mesoMOF-2;
Fig. 7 Scanning electron microscopy (SEM) image of IPD-mesoMOF-2A;
Fig. 8 Nitrogen adsorption isotherms and pore size distribution of IPD-mesoMOF-2A
Fig. 9 X-ray powder pattern of IPD-mesoMOF-3;
Fig. 10 Scanning electron microscopy (SEM) image of IPD-mesoMOF-3A;
Fig. 11 Nitrogen adsorption isotherms and pore size distribution of IPD-mesoMOF-3A;
Fig. 12 X-ray powder pattern of IPD-mesoMOF-4;
Fig. 13 Scanning electron microscopy (SEM) image of IPD-mesoMOF-4A;
Fig. 14 Nitrogen adsorption isotherms and pore size distribution of IPD-mesoMOF-4A;
Fig. 15 X-ray powder pattern of IPD-mesoMOF-5;
Fig. 16 Scanning electron microscopy (SEM) image of IPD-mesoMOF-5A;
Fig. 17 Nitrogen adsorption isotherms and pore size distribution of IPD-mesoMOF-5A;
Fig. 18 X-ray powder pattern of IPD-mesoMOF-6;
Fig. 19 Scanning electron microscopy (SEM) image of IPD-mesoMOF-6A;
Fig. 20 Nitrogen adsorption isotherms and pore size distribution of IPD-mesoMOF-6A;
Fig. 21 X-ray powder pattern of IPD-mesoMOF-7;
Fig. 22 Scanning electron microscopy (SEM) image of IPD-mesoMOF-7A;
Fig. 23 Nitrogen adsorption isotherms and pore size distribution of IPD-mesoMOF-7A;
Fig. 24 X-ray powder pattern of IPD-mesoMOF-8;
Fig. 25 Scanning electron microscopy (SEM) image of IPD-mesoMOF-8A;
Fig. 26 Nitrogen adsorption isotherms and pore size distribution of IPD-mesoMOF-8A;

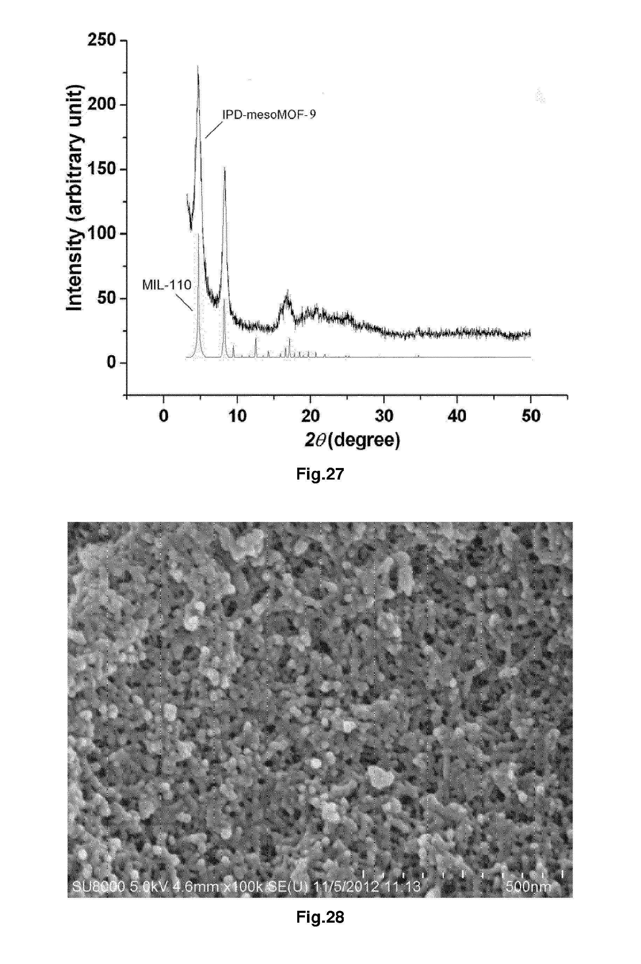

Fig. 27 X-ray powder pattern of IPD-mesoMOF-9;
Fig. 28 Scanning electron microscopy (SEM) image of IPD-mesoMOF-9A;

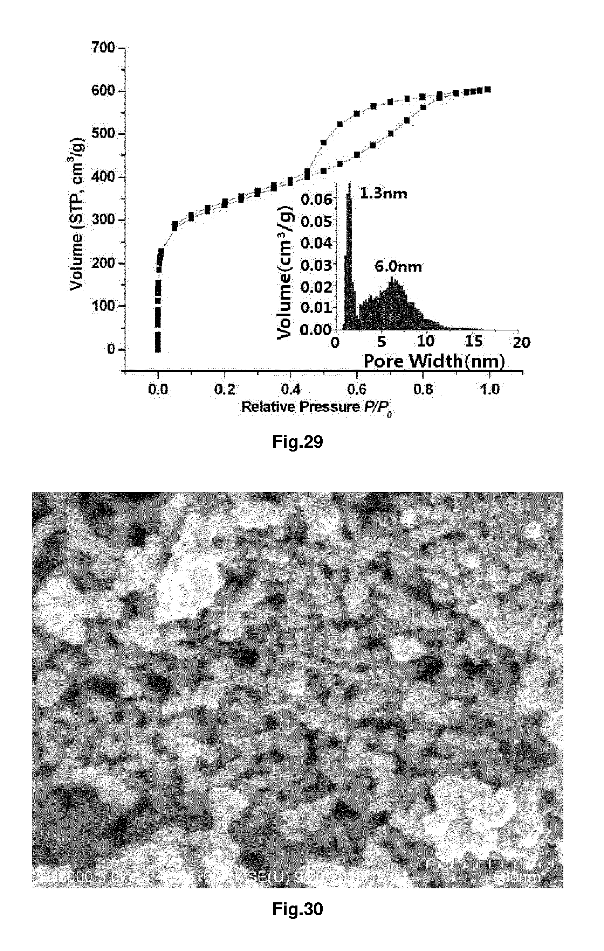

Fig. 29 Nitrogen adsorption isotherms and pore size distribution of IPD-mesoMOF-9A;
Fig. 30 Scanning electron microscopy (SEM) image of IPD-mesoMOF-9B;

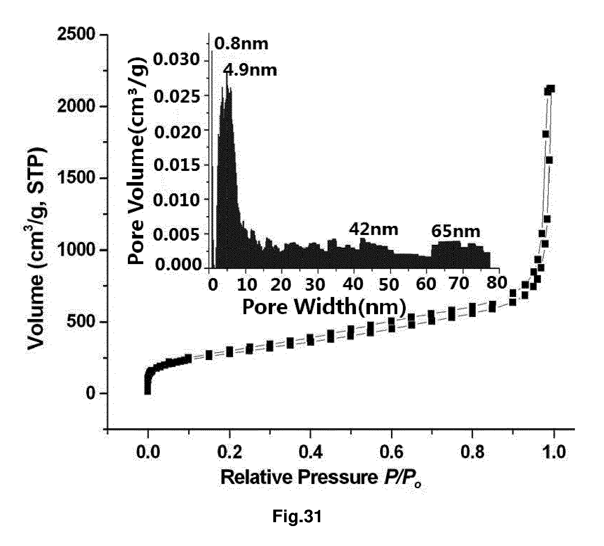

Fig. 31 Nitrogen adsorption isotherms and pore size distribution of IPD-mesoMOF-9B.

### Detailed description of the invention

"Range" disclosed herein is in the form of lower limit and upper limit. There may be one or more lower limit, and one or more upper limit respectively. Given range is defined by a lower limit and an upper limit. Selected lower and upper define the particular range boundaries. All the range can be defined by such way containable and combinable, that is, any lower limit can combine with any upper limit to form a range. For example, the range 2000-6000 and 50-200 are listed for specific parameters, it should be understand that the range of 2000-5000 or 50-210 are also expectable. Additionally, if minimum range values of 1 and 2 are listed, and if maximum range values of 3,4 and 5 are listed, the following ranges can all be expected : 1-3, 1-5, 1-4, 2 - 3,2-4 and 2-5.

In the present application, unless otherwise indicated, the content range of each components of the composition and its preferred range can be combined with each other to form new technical solutions.

In the present application, unless otherwise indicated, all "part" and percentage(%) refer to percentage by weight.

In the present application, unless otherwise indicated, the sum of percentages of all components of the composition is 100%.

In the present application, unless otherwise indicated, the numerical range"a-b" means abbreviated expression of any real number between a and b, where a and b are real numbers. For example, numerical range "0-5" means all real numbers between 0 and 5 have been listed in herein, and "0-5" is abbreviated expression of combination of these values.

If not otherwise stated, the basis for percentages (including percentage by weight) according to the present invention is the total weight of the composition.

In the present application, unless otherwise indicated, all embodiments and preferred embodiments mentioned herein may be combined with each other to form new technical solutions.

In the present application, unless otherwise indicated, all technical features and preferred features mentioned herein may be combined with each other to form new technical solutions.

In the present application, unless otherwise indicated, all steps mentioned herein may be sequentially performed, and can be randomly performed, but sequential performance is preferred. For example, the method comprises the steps of (a) and (b), indicating that the method may include the steps of sequential performance of (a) and (b), may also include the steps of sequential performance of (b) and (a). For example, the method may further include the step of (c), indicating the step (c) can be added in the method in any order. For example, the method may comprise the steps of (a), (b) and (c), may also include the steps of (a), (c) and (b), may also include the steps of (c), (a) and (b) and the like.

In the present application, unless otherwise indicated, the "include" mentioned herein means an open type, also can be closed type. For example, the "include" may represent that it may also contain other components not listed, and also may include only the listed components. As used herein, "containing", "having" or "including" include "comprising", " mainly constituted of......" "...... essentially composed of ......" and "consisted of "; "mainly consisted of"," essentially composed of...... ", and" constituted of...... " belong to the specific concepts of "containing"," having "or" including".

Features mentioned in the present invention and features mentioned in the examples may be combined. All of the features disclosed in this specification may be used simultaneously with any forms of the combination; the various features disclosed in the specification may be substituted by alternative features providing same, equal or similar purpose. Therefore, unless otherwise specified, the disclosed features are only common examples of equal or similar features.

If not specifically illustrated, all materials of the present invention may be commercially available; or can be prepared according to conventional methods in the art. Unless otherwise defined or specified, all professional and scientific terms used herein have the same meanings as those well known by the skilled in the art. Furthermore, any methods and materials similar or equal to those described can be used in the method of the present invention.

The present invention is described in detail in connection with the following examples, which are not to be construed in any way as limiting the scope of the present invention.

### Raw materials

All chemical reagents are commercially available products.

### Examples

The preparation method of IPD-mesoMOF-1∼9 of the present invention comprises the steps as follows:

### (1) Providing reaction mass:

### (a) For IPD-mesoMOF-1 (based on MOF of MIL-100(M), M=Al³⁺, Fe³⁺, Cr³⁺,Sc³⁺ and In³⁺)

A metal salt selected from nitrate (NO₃⁻), sulfate (SO₄²⁻), perchlorate (ClO₄⁻) when the metal M=Al³⁺ and In³⁺;

A metal salt selected from nitrate (NO₃⁻), sulfate (SO₄²⁻), perchlorate (ClO₄⁻), hydrochloride (Cl⁻), hydrobromide (Br⁻), acetate (CH₃COO⁻) or formate (HCOO⁻) when the metal M=Fe³⁺, Sc³⁺ or Cr³⁺;

Benzene-1 ,3,5-tricarboxylic acid(BTC) as the ligand; and

### A solvent;

The molar ratio of each component is as follows: M³⁺: benzene-1 ,3,5-tricarboxylic acid (BTC): solvent = 2 : 1 : 200 - 500.

### (b) For IPD-mesoMOF-2(based on MOF of MIL-53(Al))

Aluminum nitrate (NO₃⁻), aluminum sulfate (SO₄²⁻) or aluminum perchlorate (ClO₄₋); 1,4 - p-phthalic acid (BDC) or 2 - X-substituted-1 ,4 - p-phthalic acid (X-BDC) (X = F, Cl, Br, I, NO₂, NH₂) as the ligand; and a solvent; the molar ratio of each component is as follows: Al³⁺: BDC (or X-BDC): solvent = 1.2: 1: 400 - 800.

### (c) For IPD-mesoMOF-3(based on MOF of HKUST-1)

Copper acetate (copper formate or copper propionate); benzene-1,3,5-tricarboxylic acid (BTC) as the ligand; and a solvent; the molar ratio of each component is as follows: Cu²⁺: benzene-1,3,5-tricarboxylic acid ligand (BTC): solvent=2: 1: 200-500;

### (d) For IPD-mesoMOF-4(based on MOF of DUT-5)

Aluminum nitrate (NO₃⁻), aluminum sulfate (SO₄²⁻), or aluminum perchlorate (ClO₄⁻); 4,4'-biphenyldicarboxylic acid (BPDC), (2-nitro-4,4'-biphenyldicarboxylic acid (NBPDC), 2-amino-4,4'- biphenyldicarboxylic acid(ABPDC), 2,2'-dinitro-4,4'-biphenyldicarboxylic acid(DNBPDC)) or 2,2'-diamino-4,4'- biphenyldicarboxylic acid(DABPDC) as the ligand; and a solvent; the molar ratio of each component is as follows: Al³⁺: BPDC(NBPDC, ABPDC, DNBPDC or DABPDC): solvent =1.4: 1: 800-1400;

### (e) For IPD-mesoMOF-5(based on MOF of DUT-4)

Aluminum nitrate (NO₃⁻), aluminum sulfate (SO₄²⁻) or aluminum perchlorate (ClO₄⁻); 2,6-naphthalenedicarboxylic acid(NDC) as the ligand; and a solvent; the molar ratio of each component is as follows: Al³⁺: 2,6-naphthalenedicarboxylic acid(NDC) : solvent=1.4: 1: 800-1400;

### (f) For IPD-mesoMOF-6(based on MOF of MIL-101(Cr))

Trivalent Cr nitrate(NO₃⁻), trivalent Cr sulfate (SO₄²⁻), trivalent Cr perchlorate (ClO₄⁻), trivalent Cr hydrochloride (Cl⁻), trivalent Cr hydrobromide (Br⁻), trivalent Cr acetate (CH₃COO⁻) or trivalent Cr formate(HCOO⁻); 1,4-p-phthalic acid (BDC) or 2 - X-substituted-1,4-p-phthalic acid (X-BDC) (X = F, Cl, Br, I, NO₂, NH₂) as the ligand; and a solvent. The molar ratio of each component is as follows: Cr³⁺: 1,4-p-phthalic acid (BDC): solvent =1.2: 1: 800-1400.

### (g)For IPD-mesoMOF-7(based on MOF of MIL-1 01 NDC(Cr))

Trivalent Cr nitrate(NO₃⁻), trivalent Cr sulfate (SO₄²⁻), trivalent Cr perchlorate (ClO₄⁻), trivalent Cr hydrochloride (Cl⁻), trivalent Cr hydrobromide (Br⁻), trivalent Cr acetate (CH₃COO⁻) or trivalent Cr formate(HCOO⁻); 2,6-naphthalenedicarboxylic acid(NDC) as the ligand; and a solvent; the molar ratio of each component is as follows: Cr³⁺: 2,6-naphthalenedicarboxylic acid(NDC): solvent=1.2: 1: 800-1400;

### (h) For IPD-mesoMOF-8 (based on MOF having MIL-101 topological structure formed by Cr(III) and BPDC)

Trivalent Cr nitrate(NO₃⁻), trivalent Cr sulfate (SO₄²⁻), trivalent Cr perchlorate (ClO₄⁻), trivalent Cr hydrochloride(Cl⁻), trivalent Cr hydrobromide (Br⁻), trivalent Cr acetate (CH₃COO⁻) or trivalent Cr formate(HCOO⁻); 4,4'-biphenyldicarboxylic acid(BPDC),(2-nitro-4,4'-biphenyldicarboxylic acid(NBPDC), 2-amino-4,4'-biphenyldicarboxylic acid(ABPDC), 2,2'-dinitro-4,4'- biphenyldicarboxylic acid(DNBPDC) or 2,2'-diamino-4,4'- biphenyldicarboxylic acid(DABPDC) as the ligand; and a solvent; the molar ratio of each component is as follows: Cr³⁺: BPDC(NBPDC, ABPDC, DNBPDC or DABPDC): solvent=1.1: 1: 1000∼2000.

### (i) For IPD-mesoMOF-9((based on MOF of MIL-110)

Aluminum nitrate (NO₃⁻), Aluminum sulfate (SO₄²⁻) or Aluminum perchlorate (ClO₄⁻); benzene-1,3,5-tricarboxylic acid (BTC) as the ligand; and a solvent; the molar ratio of each component is as follows: Al³⁺: benzene-1,3,5-tricarboxylic acid ligand(BTC): solvent = 3: 1: 120-300;

### (2) Reaction solvent

The solvent is a fatty alcohol of less than 5 carbon atoms or a mixed solvent; the mixed solvent is the fatty alcohol in combination with N, N-dimethylformamide (DMF) or mixture of two or more of the fatty alcohols, the ratio of each component of the mixed solvent is adjusted if desired;

### (3) Reaction conditions:

The MOF hierarchical porous materials (except IPD-mesoMOF-3) are synthesized by solvothermal method or microwave synthesis method, the reaction temperatures are as follows:

For IPD-mesoMOF-1 (Al, Fe, Cr, Sc and In): 90-100°C, solvothermal method for 10-24 hrs, or microwave heating for 3-5min;
For IPD-mesoMOF-1(Cr): 130-160°C, solvothermal method for 4-5 hrs, or microwave heating for 2-3min;
For IPD-mesoMOF-2: 90-120°C, solvothermal method for 14-24 hrs, or microwave heating for 8-12min;
For IPD-mesoMOF-3: room temperature 20-35°C, ultrasonic radiation for 0.5-2 hrs;
For IPD-mesoMOF-4: 110-130°C, solvothermal method for 18-28 hrs, or microwave heating for 8-12min;
For IPD-mesoMOF-5: 110-130°C, solvothermal method for 18-28 hrs, or microwave heating for 8-12min;
For IPD-mesoMOF-6: 130-160°C, solvothermal method for 3-5 hrs, or microwave heating for 3-5min;
For IPD-mesoMOF-7: 130-160°C, solvothermal method for 3-5 hrs, or microwave heating for 3-5min;
For IPD-mesoMOF-8: 130-160°C, solvothermal method for 3-5 hrs, or microwave heating for 3-5min;
For IPD-mesoMOF-9: 90-120°C, solvothermal method for 14-24 hrs, or microwave heating for 8-12min;

The MOF-type hierarchical porous material namely IPD-mesoMOF-1∼9 are based on MOF of MIL-100, MIL-53, HKUST-1, DUT-5, DUT-4, MIL-101(Cr), MIL-1 01 NDC and MIL-1 01 BPDC. The size of the NMOF particles is less than 120nm. The hierarchical pores are comprised of micropores and mesopores, forming MOF-type hierarchical porous material-nA (n=1∼9); or comprised of micropores, mesopores and macropores, forming MOF-type hierachical porous material-nB (n=1∼9).

### Example 1:

### The preparation method of hierarchical porous material namely IPD-mesoMOF-1 (i) The preparation method of IPD-mesoMOF-1A

A salt of metal (Al, Fe, Cr, Sc or In), BTC, and a fatty alcohol as described above (or mixed with one or more other specified solvent) are mixed at a molar ratio of M³⁺: benzene-1 ,3,5-tricarboxylic acid (BTC): solvent = 3: 2: 400-500.

After being uniformly mixed at room temperature, the mixture is transferred to a stainless steel Teflon-lined autoclave under closed conditions. The reaction temperature and time are depended on the metal used (it is also true for microwave heating synthesis). The reaction is cooled to room temperature upon completion of the reaction, majority of the solvent is removed through filtration or centrifugation, the remaining gummy material is dried into dry glue at room temperature (or 50°C under vacuum), then extracted and washed with anhydrous ethanol or methanol in the Soxhlet extractor for more than 6hr. Residual ethanol is removed at 150°C under vacuum (0.2 mmHg), to obtain the desired hierarchical porous materials namely IPD-mesoMOF-1A, yield: about 95-98% (based on BTC).

### (ii) The preparation method of IPD-mesoMOF-1B

The solvent used in preparation of the IPD-mesoMOF-1A is replaced with a mixed solvent of anhydrous aliphatic alcohol, and according to the requirements for different macropores, mixed with suitable amount of NaCl nanoparticles (particle size of 50-500nm) (NaCl moles/Metal moles in MOF<10), dispersed evenly using ultrasonic heating. The remaining steps are the same as those for IPD-mesoMOF-1A. After the obtained xerogel is washed to remove NaCl with deionized water, then extracted by Soxhlet extractor with ethanol. Yield: about 95% (based on the ligand BTC used).

The preparation method of IPD-mesoMOF-1A (Al) is illustrated in detail as follows:

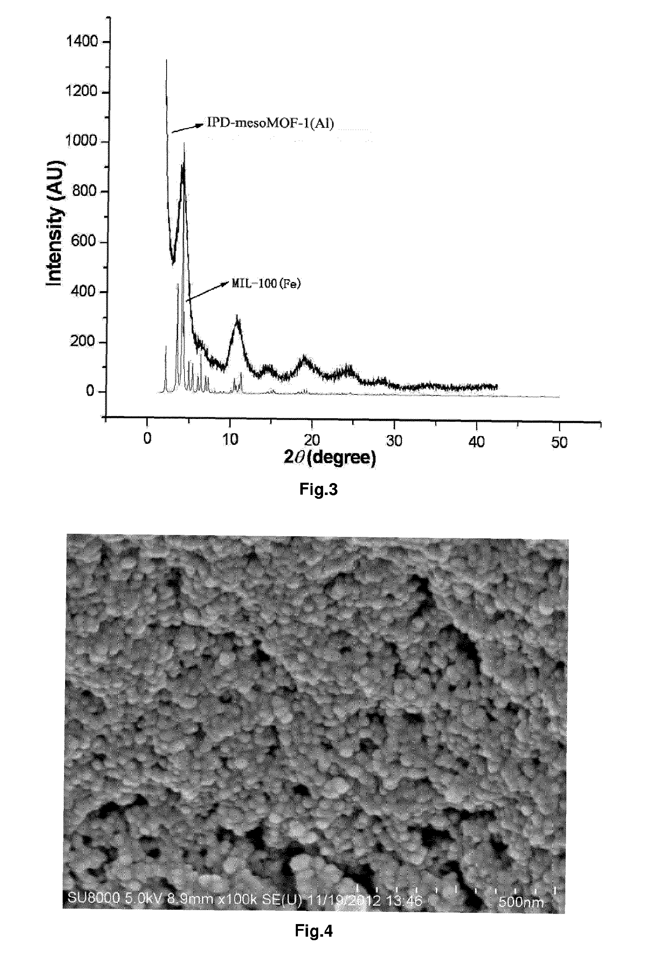

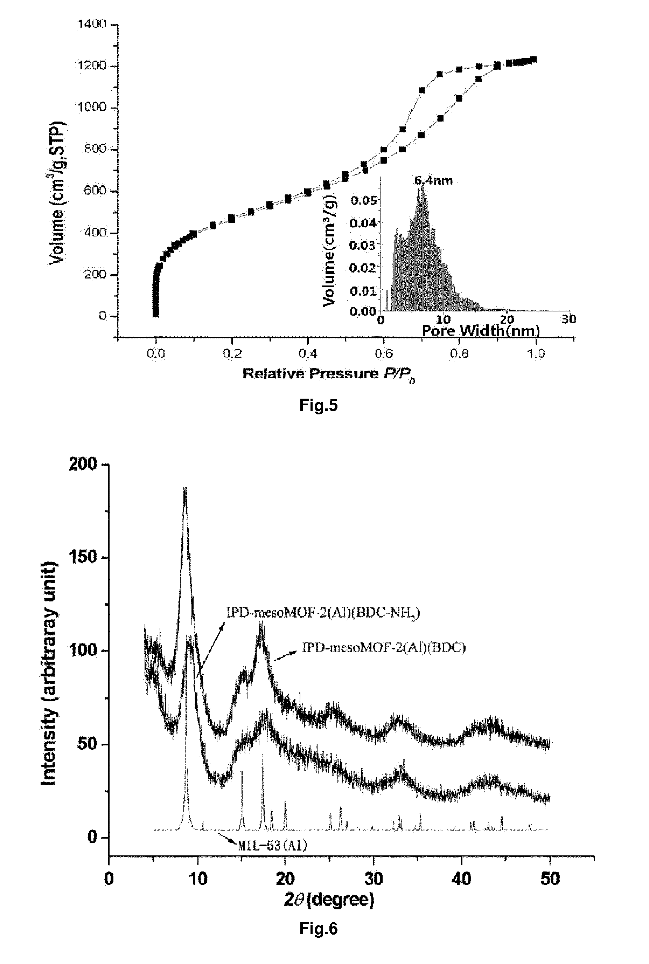

0.462 g (1.2 mmol) Al(NO₃)₃·9H₂O and 0.168 g (0.8 mmol) BTC are dissolved in 15 mL of anhydrous ethanol and stirred at room temperature for half hour, transferred into a 30 ml Teflon-lined autoclave, heated at 100 °C for 12 hrs. After cooled to room temperature, the obtained gel-like material is dried at room temperature to form dry glue, extracted with ethanol in Soxhlet extractor, dried at 150 °C under vacuum (0.2 mmHg) for 12hrs. Yield: above 96% (based on the ligand BTC used). (Fig. 3, X-ray powder pattern). The size of nanoparticles of MIL-100 (Al) is about 30 nm (Fig. 4, SEM), micropores (0.8nm) and mesoporoes (6.4 nm), BET specific surface area is 1684m²/g, pore volume is 1.9 cm³/g (N₂ gas adsorption isotherms and pore size distribution, Fig. 5)

The preparation method of IPD-mesoMOF-1B (Al) is illustrated in detail as follows:

0.3376g Al(NO₃)₃·9H₂O and 0.126 g (0.6 mmol) BTC are dissolved in 13 mL of anhydrous ethanol, and stirred at room temperature for half hour, then mixed with 0.293 g (5 mmol) of sodium chloride nanoparticles (particle size of 500 nm), ultrasonic heated and mixed evenly. Then the mixture is quickly transferred to a 30 ml Teflon-lined stainless autoclave at 100 °C for 12 hrs. After cooled to room temperature, the obtained gel-like material is dried at room temperature, washed to remove NaCl with deionized water and then Soxhlet extracted in ethanol, resulting IPD-mesoMOF-1B (Al), yield: about 94%.

### Example 2:

The preparation method of hierarchical porous material namely IPD-mesoMOF-2

### (i) The preparation method of IPD-mesoMOF-2A

An aluminum salt (nitrate, sulfate or perchlorate), terephthalic acid (BDC) or 2 - substituted terephthalic acid (X-BDC) and a fatty alcohol mentioned above (or mixed with one or more other specified solvent) are mixed at a molar ratio of Al³⁺: (BDC or X-BDC): solvent = 1.1: 1: 400-500 and stirred. Then the mixture is transferred to a Teflon-lined stainless steel autoclave to react under airtight condition at 100-120 °C for 14-24 hrs (or microwave heated for 8 to 12min). The reaction is cooled to room temperature upon completion of the reaction, majority of the solvent is removed through filtration or centrifugation, a waxy material is dried to form xerogel at room temperature (or 50°C under vacuum), then extracted and washed with anhydrous ethanol or methanol in Soxhlet extractor for over 6 hrs. The resultant is heated at 150°C under vacuum (0.2 mmHg) for 12 hrs to remove residual ethanol to obtain the desired hierarchical porous material namely IPD-mesoMOF-2A, yield: 96-98% (based on BDC).

### (ii) The preparation method of IPD-mesoMOF-2B: similar with that of IPD-mesoMOF-1B

The preparation method of IPD-mesoMOF-2A is illustrated in detail as follows:

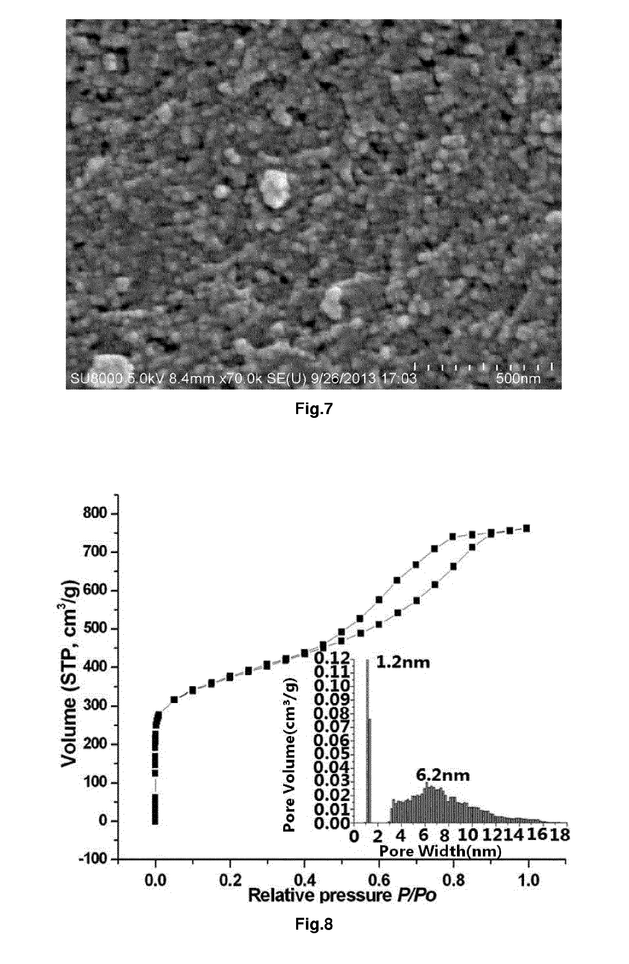

0.41g(1.1 mmol) Al(NO₃)₃·9H₂O and 0.17 g (1.0 mmol) BDC are added in 15mL of anhydrous ethanol, and stirred at room temperature, then transferred to a 30 ml sealed reactor with Teflon-lined and kept at 120 °C to react for 24 hrs. After cooled to room temperature, the gel-like material is dried to xerogel at room temperature (or 50 °C under vacuum), then extracted and washed with anhydrous ethanol or methanol in Soxhlet extractor for over 6 hrs. The resultant is heated at 150 °C under vacuum (0.2 mmHg) to obtain hierarchical porous material namely IPD-mesoMOF-2A, yield: about 95%-98% (based on BDC). The size of nanoparticles of MIL-53 (Al) constituting IPD-mesoMOF-2A (Fig. 6, X-ray powder pattern) is about 40nm (Fig. 7, SEM), BET specific surface area is 1340 m²/g, a pore volume is 1.2 cm³/g (N₂ gas adsorption isotherms and pore size distribution, Fig. 8), micropores(1.2 nm) and mesopores (6.2 nm).

### Example 3

The preparation method of hierarchical material, namely IPD-mesoMOF-3

### (i)The preparation method of IPD-mesoMOF-3A

Copper acetate (formic acid copper or propionic acid copper), BTC and methanol (or ethanol, or mixed solvent) are mixed at a molar ratio of Cu²⁺: benzene-1,3,5-tricarboxylic acid (BTC): solvent = 3: 2: 400-500, and ultrasonically heated to react at room temperature (20-30 °C) for 40-120 min. After the reaction is completed, majority of the solvent is removed through filtration or centrifugation, and then the paste-like material is dried to from dry glue in air at room temperature (or 50 °C under vacuum). And then the dry glue is dried at 130 °C under vacuum for more than 6hrs. The above-mentioned dry glue is extracted and washed with anhydrous ethanol or methanol in Soxhlet extractor for over 6 hrs, then heated at 150 °C under vacuum (0.2 mmHg) for more than 12 hrs to remove residual alcohol to obtain the desired hierarchical porous material namely IPD-mesoMOF-3A, yield: about 95-98% (based on BTC).

### (ii) The preparation method of IPD-mesoMOF-3B: similar with that of IPD-mesoMOF-1B

The preparation method of IPD-mesoMOF-3A is illustrated in detail as follows:

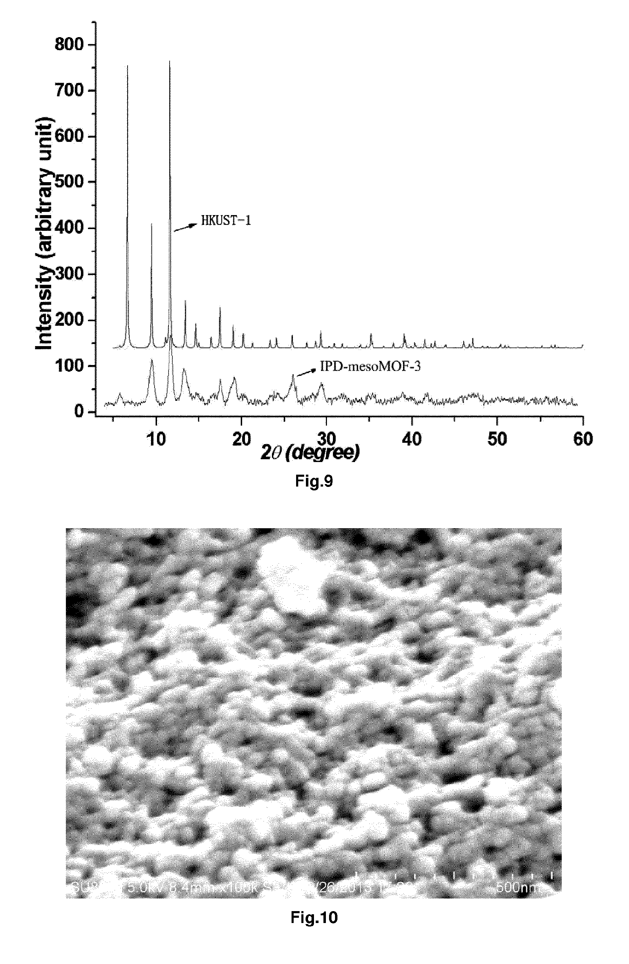

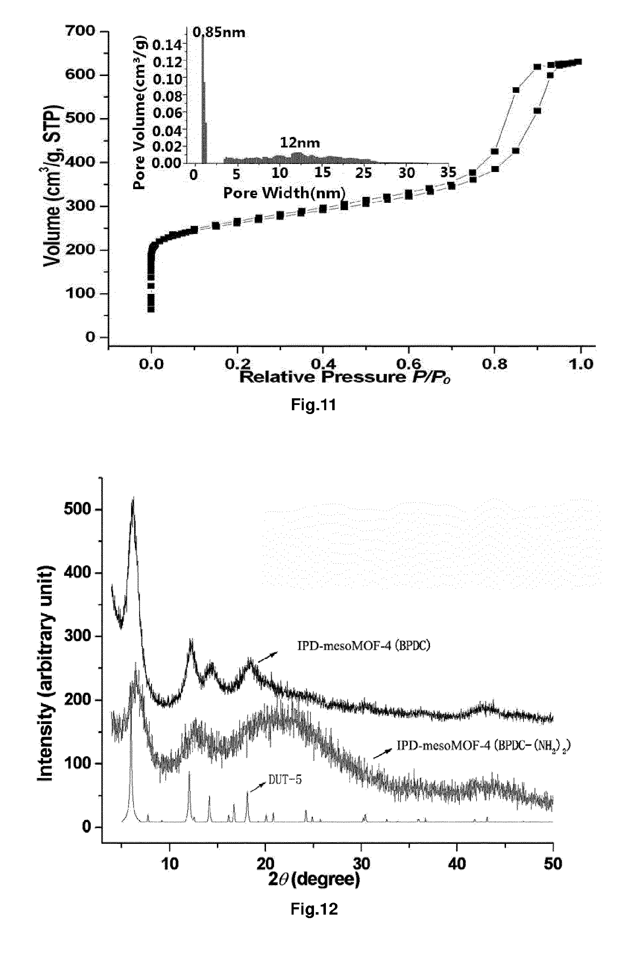

0.18 grams (0.9 mmol) Al(NO₃)₃·9H₂O, 0.13 grams(0.6 mmol) BTC and 0.38 grams(1.2 mmol) tetrabutylammonium bromide are dissolved in 15 mL anhydrous ethanol, react under ultrsonic radiation at room temperature (28 °C) for 40 min. The obtained paste product stands at room temperature for 24 hrs to form dry glue. The dry glue is further dried at 130 °C under vacuum (0.1 mmHg), and then extracted and washed with anhydrous ethanol or methanol in Soxhlet extractor for over 6hrs. Then, the pure dry glue is heated again at 150 °C under vacuum (0.2 mmHg) for 12h to remove residual ethanol to obtain the hierarchical porous material namely IPD-mesoMOF-3A, yield: about 94 - 97% (based on BDC). The size of nanoparticles of KHKUST-1 (Fig. 9, X- ray powder diffraction pattern) constructing IPD-mesoMOF-3A is about 20 nm (Fig. 10, SEM), micropores (0.85nm) and mesopores BET (12nm), specific surface area is 971m²/g, pore volume 0.98cm³/g (N₂ gas adsorption isotherms and pore size distribution, Fig. 11).

### Example 4

### The preparation method of hierarchical porous material namely IPD-mesoMOF-4 (i) The preparation method of IPD-mesoMOF-4A

An aluminum salt(nitrate, sulfate or perchlorate), 4,4' - biphenyl acid (BPDC) (or 2-nitro -4,4'-biphenylene formic acid (NBPDC), 2-amino-4,4'-biphenyl dicarboxylic acid (ABPDC), 2,2'-dinitro-4,4'-biphenyldicarboxylic acid (DNBPDC)) and 2,2 '-diamino-4,4' - biphenylene formic acid (DABPDC)) and ethanol (or mixed with one or more other specified solvent) are mixed at a molar ratio of Al³⁺: BPDC (or NBPDC, ABPDC, DNBPDC and DABPDC): solvent = 1.4: 1: 800 - 1000 and stirred. Then the mixture is transferred to a Teflon-lined stainless steel reactor to react under airtight conditions at 110 - 120 °C for 18-28 hrs (microwave heated for 8-12 min). Upon completion of the reaction, then the reaction is cooled to room temperature, most majority of the solvent is removed through filtration or centrifugation, the paste-like material is dried at room temperature ( 50 °C under vacuum) to form dry glue, then extracted and washed with anhydrous ethanol or methanol in the Soxhlet extractor for over 6hrs. The resultant is heated at 150°C under vacuum (0.2mmHg) for 12 hrs to remove the residual ethanol to obtain the desired hierarchical porous material namely IPD-mesoMOF-4A, yield: about 97-98% (based on organic ligand).

### (ii) IPD-mesoMOF-4B: the method is similar with that of IPD-mesoMOF-1B

The preparation method of IPD-mesoMOF-4A is illustrated in detail as follows:

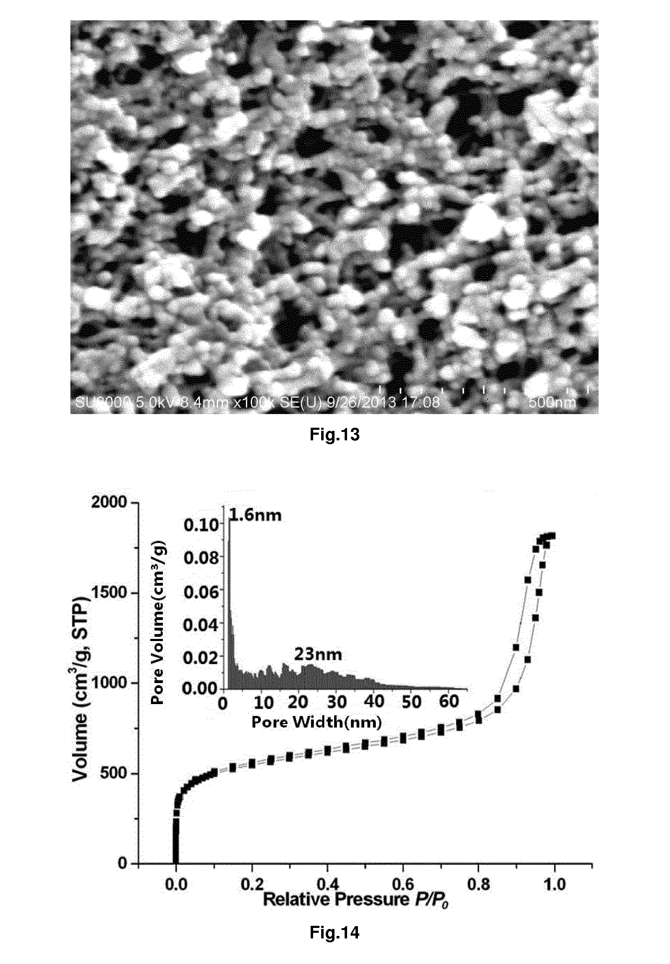

0.28g (0.75 mmol) Al(NO₃)₃·9H₂O, 0.11 g (0.54 mmol) BPDC and 0.69 g (2.14 mmol) tetrabutyl ammonium bromide and 15mL anhydrous ethanol are mixed and stirred at room temperature in 30 ml Teflon reactor and then sealed to react at 120 °C for 24 hrs. After cooled to room temperature, the paste-like material is dried to dry glue at room temperature (or 50 °C under vacuum), then extracted and washed with anhydrous ethanol or methanol in the Soxhlet extractor for over 6 hrs. The resultant is heated at 150 °C under vacuum (0.2 mmHg) for 12hrs to remove residual ethanol to obtain hierarchical porous material namely IPD-mesoMOF-4A, yield: about 95-98% (based on BPDC). The size of nanoparticles of DUT-5 consisting of IPD-mesoMOF-4A (Fig. 12, X-ray powder pattern) is about 20 nm (Fig. 13, SEM), micropores (1.6 nm) and mesopores (2-50nm), BET specific surface area is 2026 m²/g, pore volume is 2.8 cm³/g (N₂ gas adsorption isotherms and pore size distribution, Fig. 14).

### Example 5

The preparation method of hierarchical porous IPD-mesoMOF-5

### (i) The preparation method of IPD-mesoMOF-5A

An aluminum salt (nitrate, sulfate and perchlorate), 2,6- naphthalene acid (NDC) and ethanol (or mixed with one or more other specified solvent) are mixed at a molar ratio of Al³⁺: NDC: solvent =1.2: 1: 800-1000 and stirred. And then the mixture is transferred to the stainless steel reactor with Teflon lined to react under airtight condition at 110-120°C for 18-28hrs (microwave heated for 8-12min). After the reaction is cooled to room temperature upon completion of the reaction, majority of the solvent is removed through filtration or centrifugation, the obtained paste-like material is dried to form dry glue at room temperature (or 50°C under vacuum), then extracted and washed with anhydrous ethanol or methanol in Soxhlet extractor for over 6hrs. The resultant is heated at 150°C under vacuum (0.2mmHg) to remove residual ethanol to obtain the hierarchical porous material namely IPD-mesoMOF-5A.

### (ii) IPD-mesoMOF-5B: the method is similar to that of IPD-mesoMOF-1B

The preparation method of IPD-mesoMOF-5A is illustrated in detail as follows:

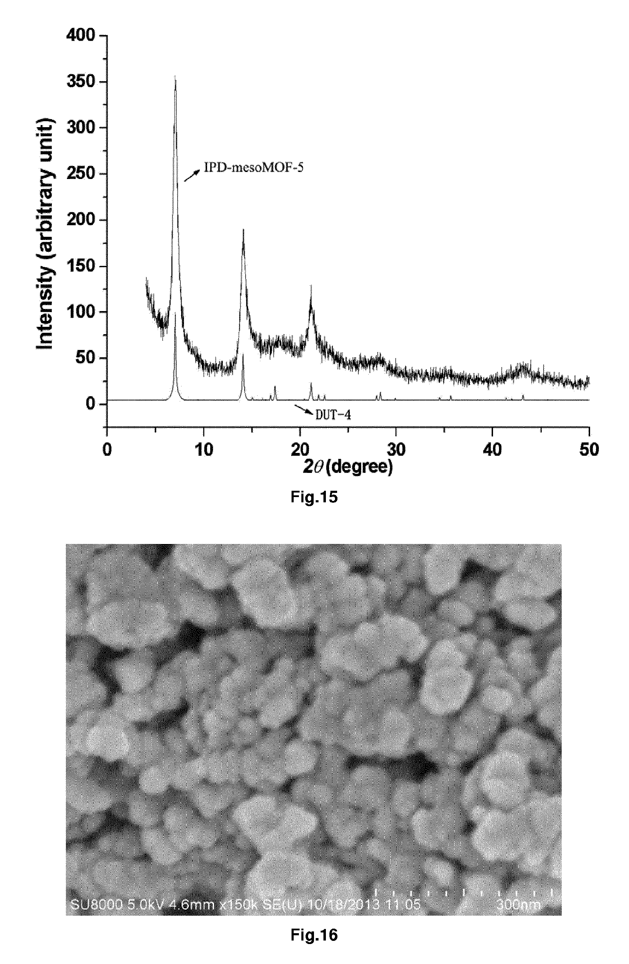

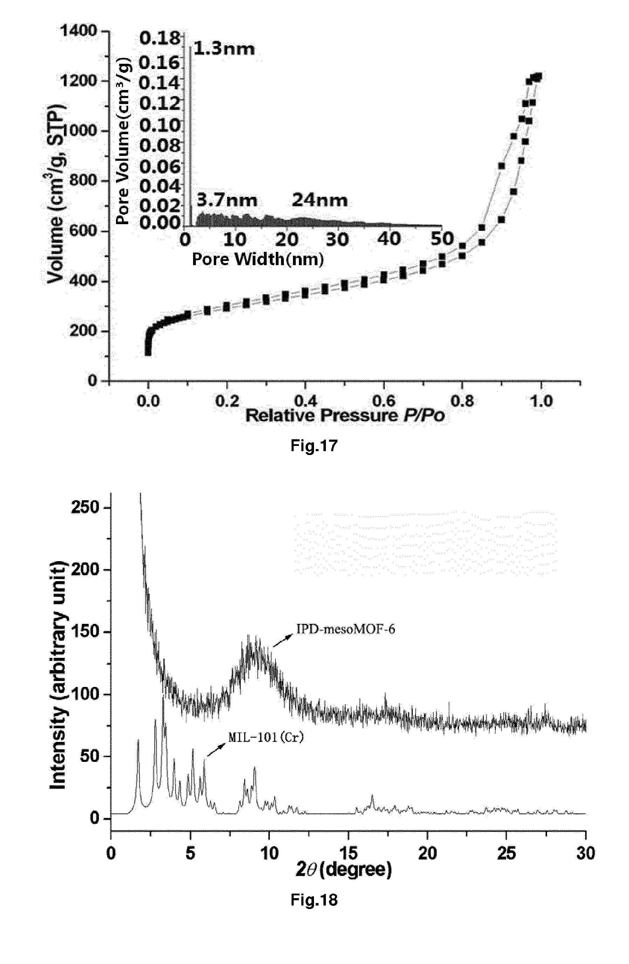

0.25g (0.6mmol) Al(NO₃)₃·9H₂O, 0.11g (0.5mmol) NDC and 15mL anhydrous ethanol are mixed in 30 ml Teflon reactor, and stirred at room temperature and then sealed to react at 120°C for 24hrs. After cooled to room temperature, the obtained paste-like material is dried to form dry glue at room temperature (or 50°C under vacuum), then extracted and washed with anhydrous ethanol or methanol in Soxhlet extractor for over 6 hrs. The resultant is heated at 150°C under vacuum (0.2 mmHg) for 12hrs to remove residual ethanol to obtain the hierarchical porous material namely IPD-mesoMOF-5A, yield: about 98% (based on NDC). The size of nanoparticles of DUT-4 consisting of IPD-mesoMOF-5A (Fig. 15, X- ray powder diffraction pattern) is about 50 nm (Fig. 16, SEM); micropores (1.3 nm) and mesopores (2-40 nm), BET specific surface area is 1044 m²/g, pore volume is 1.9 cm³/g (N₂ gas adsorption isotherms and pore size distribution, Fig. 17).

### Example 6

The preparation method of hierarchical material namely IPD-mesoMOF-6

### (i) The preparation method of IPD-mesoMOF-6A:

A trivalent Cr nitrate (NO₃⁻), sulfate (SO₄²⁻), perchlorate (ClO₄⁻), hydrochloride (Cl⁻), hydrobromide (Br⁻), acetate (CH₃COO⁻) or formate (HCOO⁻); organic ligand 1,4-terephthalic acid (BDC), formic acid (HFc) (or acetic acid HAc), and solvent are mixed at a molar ratio of the components as follows: Cr³⁺: BDC: HFc: solvent =1: 1: 1: 800-1000 and stirred. And then the mixture is transferred to the stainless steel reactor with Teflon lined to react under airtight conditions at 130-160°C for 3-5 hrs (microwave heated 3-5 min). Upon completion of the reaction, the reaction was cooled to room temperature, most majority of the solvent is removed through filtration or centrifugation, the paste-like material is dried to form dry glue at room temperature (or 50°C under vacuum), then extracted and washed with anhydrous ethanol or methanol in Soxhlet extractor for over 6 hrs. The resultant is heated at 150°C under vacuum (0.2 mmHg) for 12 hrs to remove residual ethanol to obtain the MOF-type hierachical porous materials -6A, yield: about 97% (based on BDC).

### (ii) IPD-mesoMOF-6B: the method is similar to that of IPD-mesoMOF-1B

The preparation method of IPD-mesoMOF-6A is illustrated in detail as follows:

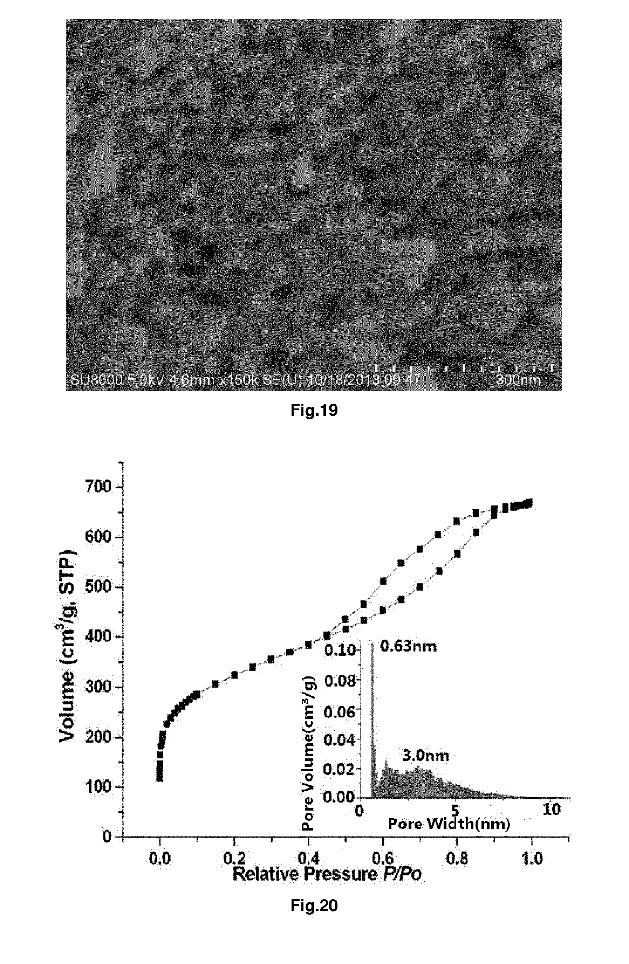

0.17 grams (0.5 mmol) Cr(NO₃)₃·6H₂O, 0.08 grams (0.5 mmol) BDC and 15 mL anhydrous ethanol are mixed and stirred at room temperature in 30 ml Teflon reactor, and then sealed to react at 150 °C for 5 hrs. After cooled to room temperature, the obtained sol-like material is dried to form dry glue at room temperature (or 50°C under vacuum), then extracted and washed with anhydrous ethanol or methanol in Soxhlet extractor for over 6 hrs. The resultant is heated at 150 °C under vacuum (0.1 mmHg) for 12 hrs to remove residual ethanol to obtain the hierarchical porous material namely IPD-mesoMOF-6A, yield: 96% (based on BDC). The size of nanoparticles of MIL-101 (Cr) consisting of IPD-mesoMOF-6A (Fig. 18, X- ray powder diffraction pattern) is about 30 nm (Fig. 19, SEM); micropores (1.3 nm) and mesopores (2-7 nm), BET specific surface area is 1169 m²/g, pore volume is 1.0 cm³/g (N₂ gas adsorption isotherms and pore size distribution, Fig. 20)

### Example 7

The preparation method of hierarchical porous material namely IPD-mesoMOF-7

### (i) The preparation method of IPD-mesoMOF-7A:

A trivalent Cr nitrate (NO₃⁻), sulfate (SO₄²⁻), perchlorate (ClO₄⁻), hydrochloride (Cl⁻), hydrobromide (Br⁻), acetate (CH₃COO⁻) or formate (HCOO⁻), organic ligand 2,6-NaphthalenedicarboxylicAcid (NDC), formic acid (HFc) (or acetic acid HAc) and solvent are mixed at a molar ratio of the components as follows, Cr³⁺: NDC: HFo: solvent =1: 1: 1: 800-1000 and stirred. And then the mixture is transferred to the stainless steel reactor with Teflon lined to react under airtight conditions at 130-160 °C for 3-5 hrs (microwave heated 3-5 min). Upon completion of the reaction, the reaction was cooled to room temperature, most majority of the solvent is removed through filtration or centrifugation, the obtained paste-like material is dried to form dry glue at room temperature (or 50 °C under vacuum), then extracted and washed with anhydrous ethanol or methanol in Soxhlet extractor for over 6 hrs. The resultant is heated at 150°C under vacuum (0.1 mmHg) for 12hrs to remove residual ethanol to obtain the hierarchical porous material namely IPD-mesoMOF-7A.

### (ii) IPD-mesoMOF-7B: the method is similar to that of IPD-mesoMOF-1B

The preparation method of IPD-mesoMOF-7A is illustrated in detail as follows:

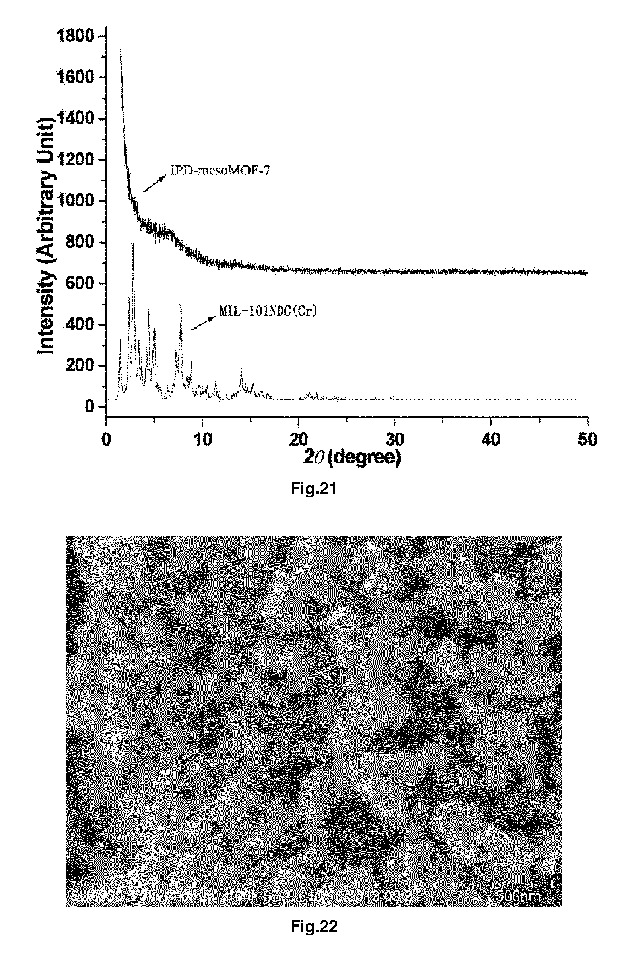

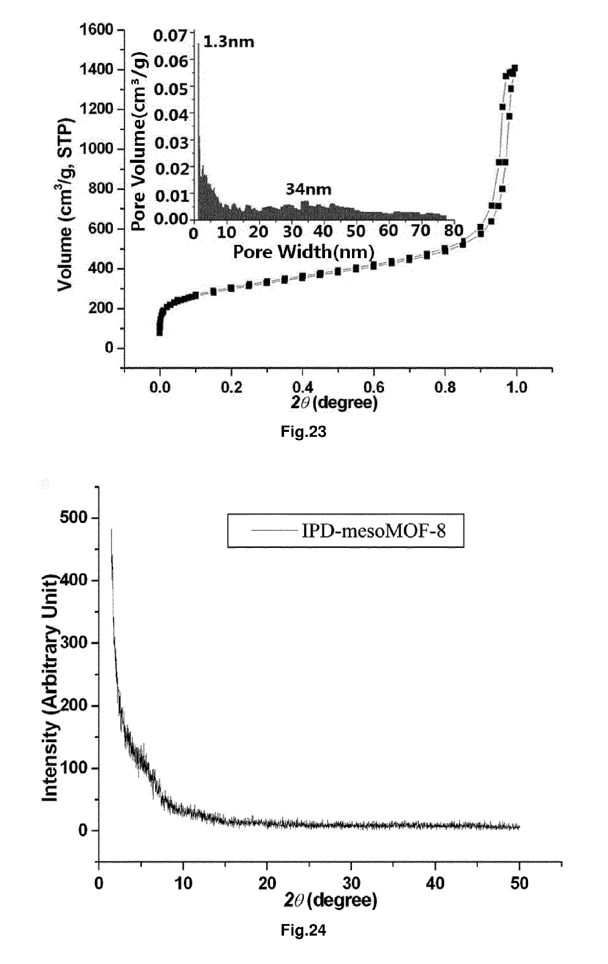

0.17 grams (0.5 mmol) Cr(NO₃)₃·6H₂O, 0.11 grams (0.5 mmol) NDC, and 15mL anhydrous ethanol are mixed and stirred at room temperature in 30 ml Teflon reactor, and then sealed to react at 120°C for 24 hrs. After cooled to room temperature, the obtained paste-like material is dried to form dry glue at room temperature (or 50 °C under vacuum), then extracted and washed with anhydrous ethanol or methanol in Soxhlet extractor for over 6hrs. The resultant is heated at 150°C under vacuum (0.1 mmHg) for 12hrs to remove residual ethanol to obtain the hierarchical porous material namely IPD-mesoMOF-7A, yield: about 98% (based on NDC). The size of nanoparticles of MIL-101 NDC consisting of IPD-mesoMOF-7A (Fig. 21, X- ray powder diffraction pattern) is about 30 nm (Figure 22, SEM); micropores (1.3nm) and mesopores (280 nm), BET specific surface area is 1078 m²/g, pore volume is 2.2 cm³/g (N₂ gas adsorption isotherms and pore size distribution, Fig. 23).

### Example 8

### The preparation method of hierachical material namely IPD-mesoMOF-8

### (i) The preparation method of IPD-mesoMOF-8A:

A trivalent Cr nitrate (NO₃⁻), sulfate (SO₄²⁻), perchlorate (ClO₄⁻), hydrochloride (Cl⁻), hydrobromide (Br⁻), acetate (CH₃COO⁻) or formate (HCOO⁻); organic ligand 4,4'-biphenyl acid (BPDC) ( or 2-nitro -4,4'- biphenylene formic acid (NBPDC), 2-amino-4,4'-biphenyl dicarboxylic acid (ABPDC), 2,2'-dinitro-4,4'-biphenyldicarboxylic acid (DNBPDC)) and 2,2 '-diamino-4,4'-biphenylene formic acid (DABPDC)), formic acid (HFo) (or acetic acid HAc), and solvent are mixed at a molar ratio of the components as follows: Cr³⁺: BPDC (NBPDC, ABPDC, DNBPDC or DABPDC) : HFo: solvent =1: 1: 1: 800 -1000 and stirred. And then the mixture is transferred to the stainless steel reactor with Teflon lined to react under airtight conditions at 130-160 °C for 3-5 hrs (microwave heated 3-5 min). Upon completion of the reaction, the reaction was cooled to room temperature, most majority of the solvent is removed through filtration or centrifugation, the gel-like material is dried under vacuum to form dry glue at room temperature (50 °C), then extracted and washed with anhydrous ethanol or methanol in Soxhlet extractor for over 6hrs. The resultant is heated at 150 °C under vacuum (0.1 mmHg) for 12 hrs to remove residual ethanol to obtain the hierarchical porous materials namely IPD-mesoMOF-8A.

### (ii) IPD-mesoMOF-8B: the method is similar to that of IPD-mesoMOF-1B

The preparation method of IPD-mesoMOF-8A is illustrated in detail as follows:

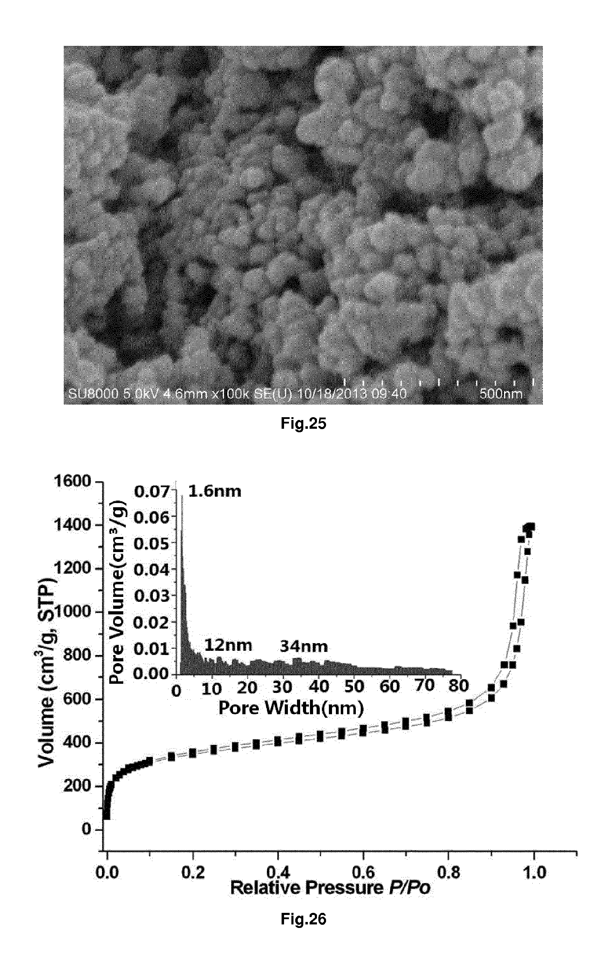

0.33 grams (0.55mmol) Cr(NO₃)₃·6H₂O, 0.12 grams (0.5mmol) BPDC and 28mL anhydrous ethanol are mixed and stirred at room temperature in 30 ml Teflon reactor, and then sealed to react at 150°C for 5hrs. After cooled to room temperature, the obtained gel-like material is then extracted and washed with anhydrous ethanol or methanol in Soxhlet extractor for over 6 hrs, and then dried in air to form dry glue air. The resultant is heated at 150 °C under vacuum (0.1 mmHg) for 12 hrs to remove residual ethanol to obtain the hierarchical porous material namely IPD-mesoMOF-8A, yield: about 98% (based on BPDC). The nanoparticles size of MIL-101BPDC consisting of IPD-mesoMOF-8A (Fig. 24, X- ray powder diffraction pattern) is about 40 nm (Fig. 25, SEM); micropores (1.6 nm) and mesopores (280 nm), BET specific surface area is 1267 m²/g, pore volume is 2.2 cm³/g (N₂ gas adsorption isotherms and pore size distribution, Fig. 26).

The above-described is only the preferred embodiment of the present invention, not intending to limit the scope of substantial technical content of the present invention, and the substantial technical content are broadly defined in the claims of the present application. Various modifications and changes in the material and method will occur to those skilled in the art. All such modifications coming within the scope of claims are intended to be included herein.

## Claims

1. A MOF-based hierarchical porous material, **characterized in that**:
the MOF-based hierarchical porous material, namely IPD-mesoMOF-1∼9, is based on the MOF-types of MIL-100(Al, Fe, Cr, Sc and In), MIL-53(Al), HKUST-1, DUT-5, DUT-4, MIL-1 01 (Cr), MIL-1 01 NDC(Cr), MIL-1 01 BPDC(Cr) and MIL-110;
the MOF-based hierarchical porous material comprises micropores originated from the MOF which aperture varies with regard to the MOF-type;
the MOF-based hierarchical porous material is based on NMOF particles with a size of less than 120nm; and
the NMOF particles with a size of less than 120 nm are capable of generating desired interparticle mesopores of 2-50 nm when they are close packed or relatively close packed.

2. The MOF-based hierarchical porous material, namely IPD-mesoMOF-1 ∼9, of claim 1, **characterized in that**:
the MOF-based hierarchical porous material comprises mesopores which are interparticle porosity in nature generated from close packing NMOF particles;
the size of the NMOF particles is less than 120nm, and the interaction between the free metal-sites and ligand residues on the surface of NMOF particles enable the stable permanent interparticle porosity formed among the close packing or relatively close packing particles; and
the NMOF particles with diameter of φm are stacked in the form of close packing, the aperture of interparticle pores of octahedral holes generated is about 0.414φm, thus, the aperture generated from close packing NMOF particles with a size of less than 120 nm falls in the mesoscopic size regime of 2 - 50 nm.

3. The MOF-based hierarchical porous material, namely IPD-mesoMOF-1 ∼9, of claim 1, **characterized in that**:
the MOF-based hierarchical porous material comprises micro- and mesopores, forming A-Form of IPD-mesoMOF-1∼8 materials; or
the MOF-based hierarchical porous material comprises micro-, meso-and macropores, forming B-Form of IPD-mesoMOF-1∼9 materials; wherein
the MOF-based hierarchical porous material prepared by supercritical CO2 drying comprises micro-, meso- and macropores, forming C-Form of IPD-mesoMOF-1∼9 materials.

4. A preparation method for the MOF-based hierarchical porous material, namely IPD-mesoMOF-1∼9 of claim 1, **characterized in that**: comprising steps as follows:
(1) providing reaction mass:
(a) for IPD-mesoMOF-1(based on MOF of MIL-100(M), M=Fe³⁺, Al³⁺, Cr³⁺, Sc³⁺ and In³⁺)
a metal(M³⁺) salt selected from the group consisted of nitrate (NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); benzene-1,3,5-tricarboxylic acid (BTC) as a ligand; and a solvent; the molar ratio of each component is as follows: M³⁺: benzene-1,3,5-tricarboxylic acid (BTC): solvent = 2: 1: 200 ∼ 500;
(b) for IPD-mesoMOF-2 (based on MOF of MIL-53(Al))
an aluminum salt selected from the group consisted of nitrate (NO₃⁻), sulfate (SO₄²⁻) and perchlorate (ClO₄⁻); 1,4 - p-phthalic acid (BDC) or 2 - X-substituted-1,4 - p-phthalic acid (X-BDC) (X = F, Cl, Br, I, NO₂, NH₂) as a ligand; and a solvent; the molar ratio of each component is as follows: Al³⁺: BDC (or X-BDC): solvent = 1.2: 1: 400 - 800;
(c) for IPD-mesoMOF-3 (based on MOF of HKUST-1)
copper acetate (copper formate or copper propionate);
benzene-1,3,5-tricarboxylic acid (BTC) as a ligand; and a solvent; the molar ratio of each component is as follows: Cu²⁺: benzene-1,3,5-tricarboxylic acid ligand (BTC): solvent=2: 1: 200∼500;
(d) for IPD-mesoMOF-4 (based on MOF of DUT-5)
an aluminum salt selected from the group consisted of nitrate (NO₃⁻), sulfate (SO₄²⁻), perchlorate (ClO₄⁻); an organic ligand selected from the group consisted of 4,4'-biphenyldicarboxylic acid (BPDC), (2-nitro-4,4'-biphenyldicarboxylic acid (NBPDC), 2-amino-4,4'-biphenyldicarboxylic acid (ABPDC), 2,2'-dinitro-4,4'-biphenyldicarboxylic acid (DNBPDC) and 2,2'-diamino-4,4'-biphenyldicarboxylic acid (DABPDC); and a solvent; the molar ratio of each component is as follows: Al³⁺: BPDC (NBPDC, ABPDC, DNBPDC or DABPDC): solvent =1.4: 1: 800∼1400;
(e) for IPD-mesoMOF-5 (based on MOF of DUT-4)
an aluminum salt selected from the group consisted of nitrate (NO₃⁻), sulfate (SO₄²⁻) and perchlorate (ClO₄⁻); 2,6-naphthalenedicarboxylic acid (NDC) as an organic ligand; and a solvent; the molar ratio of each component is as follows: Al³⁺: 2,6-naphthalenedicarboxylic acid (NDC): solvent = 1.4: 1: 800∼1400;
(f) for IPD-mesoMOF-6 (based on MOF of MIL-101(Cr))
a trivalent Cr salt selected from the group consisted of nitrate(NO₃⁻), sulfate (SO₄²⁻), perchlorate (ClO₄⁻), hydrochloride (Cl⁻), hydrobromide (Br⁻), acetate (CH₃COO⁻) and formate(HCOO⁻); 1,4-p-phthalic acid (BDC) or 2 - X-substituted-1,4-p-phthalic acid (X-BDC) (X = F, Cl, Br, I, NO₂, NH₂) as an organic ligand; and a solvent; the molar ratio of each component is as follows: Cr³⁺: 1,4-p-phthalic acid (BDC): solvent =1.2:1:800∼1400;
(g) for IPD-mesoMOF-7(based on MOF of MIL-1 01 NDC(Cr))
a trivalent Cr salt selected from the group consisted of nitrate (NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); 2,6-naphthalenedicarboxylic acid (NDC) as an organic ligand; and a solvent; the molar ratio of each component is as follows: Cr³⁺: 2,6-naphthalenedicarboxylic acid (NDC): solvent=1.2: 1: 800∼1400;
(h) for IPD-mesoMOF-8 (based on MOF having MIL-101 topological structure formed by Cr(III) and BPDC)
a trivalent Cr salt selected from the group consisted of nitrate (NO₃⁻), sulfate (SO₄²⁻), perchlorate (ClO₄⁻), hydrochloride (Cl⁻), hydrobromide (Br⁻), acetate (CH₃COO⁻) and formate (HCOO⁻); an organic ligand selected from the group consisted of 4,4'-biphenyldicarboxylic acid (BPDC), (2-nitro-4,4'-biphenyldicarboxylic acid (NBPDC), 2-amino-4,4'-biphenyldicarboxylic acid (ABPDC), 2,2'-dinitro-4,4'- biphenyldicarboxylic acid (DNBPDC) and 2,2'-diamino-4,4'- biphenyldicarboxylic acid (DABPDC); and a solvent, the molar ratio of each component is as follows: Cr³⁺: BPDC (NBPDC, ABPDC, DNBPDC or DABPDC): solvent=1.1: 1: 1000∼2000;
(i)IPD-mesoMOF-9((based on MOF of MIL-110)
Aluminum nitrate (NO₃⁻), aluminum sulfate (SO₄²⁻) or aluminum perchlorate (ClO₄⁻); benzene-1,3,5-tricarboxylic acid (BTC) as a ligand; and a solvent; the molar ratio of each component is as follows: Al³⁺ : benzene-1,3,5-tricarboxylic acid (BTC): solvent = 3: 1:120∼300;
(2) reaction solvent:
the solvent is a fatty alcohol of less than 5 carbon atoms or a mixed solvent; the mixed solvent is the fatty alcohol in combination with N, N-dimethylformamide (DMF) or mixture of two or more of the fatty alcohols, the ratio of each component of the mixed solvent is adjusted if desired;
(3) reaction conditions:
the MOF hierarchical porous materials (except IPD-mesoMOF-3) are synthesized by solvothermal method or microwave synthesis method, the reaction temperatures are as follows:
for IPD-mesoMOF-1 (Fe, Al and Sc): 90-100°C, solvothermal method for 10-24 hrs, or microwave heating for 3-5min;
for IPD-mesoMOF-1 (Cr): 130-160°C, solvothermal method for 4-5 hrs, or microwave heating for 2-3min;
for IPD-mesoMOF-2: 90-120°C, solvothermal method for 14-24 hrs, or microwave heating for 8-12min;
for IPD-mesoMOF-3: room temperature 20-35°C, ultrasonic treatment for 0.5-2 hrs;
for IPD-mesoMOF-4: 110-130°C, solvothermal method for 18-28 hrs, or microwave heating for 8-12min;
for IPD-mesoMOF-5: 110-130°C, solvothermal method for 18-28 hrs, or microwave heating for 8-12min;
for IPD-mesoMOF-6: 130-160°C, solvothermal method for 3-5 hrs, or microwave heating for 3-5min;
for IPD-mesoMOF-7: 130-160°C, solvothermal method for 3-5 hrs, or microwave heating for 3-5min;
for IPD-mesoMOF-8: 130-160°C, solvothermal method for 3-5 hrs, or microwave heating for 3-5min;
for IPD-mesoMOF-9: 90-120°C, solvothermal method for 14-24 hrs, or microwave heating for 8-12min;
(4) the regulation of stacking density of the NMOF particles:
(i) adding tetra-alkyl-ammonium halide (the alkyl is selected from methyl, ethyl, propyl, butyl; halogen ions being Cl⁻ and Br⁻) into the reaction mixture as the filling-stuff to expand the interparticle pores or controlling over the size of NMOF particles and allow them to close pack that generate the hierarchical porous material (monolithic xerogel) having micropores and mesopores, termed as A-Form material, marked as IPD-mesoMOF-nA(n = 1-9); or
(ii) adding NaCl nanoparticles of 50∼500 nm into the reaction mixture with a molar ratio of the metal constituting MOF and the NaCl nanoparticles smaller than 1: 10 affords the MOF-based hierarchical porous material (monolithic xerogel) having micro-, meso- and macropores, termed as B-Form material, marked as IPD-mesoMOF-nB (n = 1-9); or
(iii) supercritical CO2 drying the sol /gel of IPD-mesoMOF-n (n = 1-9) leads to the MOF-based hierarchical porous material (monolithic aerogel) having micro-, meso- and macropores, marked as IPD-mesoMOF-nC (n = 1-9);
(5) post-treatment of materials:
the reaction is cooled to room temperature upon the reaction completed, and the resulting sol (or gel) product mixture is prepared as xerogel either by firstly filtrating/centrifuging and then drying out in air, or by directly evaporating the solvent in air, giving rise to raw product of IPD-mesoMOF-n; wherein
the obtained xerogel was extracted with Soxhlet more than 6 hrs in anhydrous alcohol (or methanol) to expel the by-products and the un-reacted starting materials, and dried under vacuum to obtain A-Form of the MOF-based hierarchical porous material; or
the obtained xerogel is washed with deionized water to remove NaCl, and then extracted with Soxhlet more than 6 hrs in anhydrous alcohol (or methanol), and dried under vacuum to obtain B-Form of the MOF-based hierarchical porous material; wherein
the reaction is cooled to room temperature upon the reaction completed, and the resulting sol (or gel) product mixture is prepared as aerogel directly by supercritical CO2 extraction to obtain C-Form of the MOF-based hierarchical porous material.

5. A method for regulating the size of mesopores in the IPD-mesoMOF-nA matrials of claim 4, **characterized in that**, comprising addition of tetra-alkyl ammonium halide into the reaction mixture, wherein the alkyl is independently selected from methyl, ethyl, propyl and butyl; and the halogen ion is Cl⁻ or Br⁻.

6. A method for regulating the size of mesopores in the IPD-mesoMOF-nA of claim 4, **characterized in that**, a mixed solvent of fatty alcohols of less than 5 carbon atoms is used, wherein the ratio of each component of the mixed solvent is adjusted according to the conditions in claim 4.

7. A preparation method for the IPD-mesoMOF-nB materials of claim 4, **characterized in that**, comprising addition of NaCl nanoparticles into the reaction mixture for the IPD-mesoMOF-nA Form material, wherein the size of NaCl nanoparticles is 50-500 nm, the molar ratio of metal and NaCl nanoparticles constituting MOF is below 1: 10.

8. A preparation method for the IPD-mesoMOF-nC materials of claim 4, **characterized in that**, the MOF-based hierarchical porous material as aerogel obtained by performing the sol/gel reaction mixture by supercritical CO2 extraction.

9. The use of the MOF-based hierarchical porous material, namely IPD-mesoMOF-1 ∼9, of claim 1, in adsorption and storage of gas, purification of gasoline and diesel, or supporting and immobilizing biological macromolecules.

10. The use of claim 9, **characterized in that**, the gas is H₂, CH₄ or CO₂, and the impurities in gasoline and diesel are sulfur-containing heterocyclic aromatic, other aromatic hydrocarbon or heterocyclic aromatic hydrocarbon, and the biological macromolecules are protein molecules or nucleic acid molecules.

11. The use of claim 9 or claim 10, **characterized in that**, the biological macromolecules are biological enzymes or virus.
